# EUROPEAN PATENT SPECIFICATION

(11) **EP 3 550 933 B1**
(45) Date of publication and mention of the grant of the patent: **29.09.2021**
(21) Application number: 16923325.1
(22) Date of filing: 05.12.2016
(51) Int. Cl.: H05B 6/12, F24C 7/02, H05B 6/06

(54) **INDUCTION HEATING COOKER**
INDUKTIONSERWÄRMUNGSKOCHER
CUISEUR À CHAUFFAGE PAR INDUCTION

(43) Date of publication of application: 09.10.2019
(73) Proprietor: Mitsubishi Electric Corporation, Chiyoda-ku Tokyo 100-8310 (JP); Mitsubishi Electric Home Appliance Co., Ltd., Fukaya-shi, Saitama 369-1295 (JP)
(72) Inventor: BUNYA, Jun, Tokyo 100-8310 (JP); OGAWA, Takashi, Tokyo 100-8310 (JP); NAKAMURA, Teruo, Tokyo 100-8310 (JP)
(74) Representative: Pfenning, Meinig & Partner mbB
(86) International application number: PCT/JP2016/086003
(87) International publication number: WO 2018/104989

(56) References cited:
- EP-A1- 2 748 534
- WO-A1-2014/064922
- JP-A- 2003 249 336
- JP-A- 2005 317 305
- JP-A- 2006 302 595
- JP-A- 2009 094 028
- JP-A- 2009 158 225
- JP-A- 2010 244 925
- JP-A- 2010 267 433
- JP-A- 2011 054 532
- JP-A- 2013 029 237
- JP-A- 2013 137 938

## Description

### Technical Field

The present invention relates to an induction cooking heater that inductively heats an object to be heated, with a plurality of coils.

### Background Art

An induction cooking heater is known that includes, for example, an inner heating coil, an outer heating coil, and a plurality of power supply units that supply high-frequency currents to the inner heating coil and the outer heating coil independently of each other (see, for example, Patent Literature 1). JP2011054532A discloses an induction cooking heater comprising: a top plate on which an object to be heated is placed; first and second coils disposed under the top plate; a first inverter circuit configured to supply electric power to the first coil; a second inverter circuit provided separately from the first inverter circuit, the second inverter circuit being configured to supply electric power to the second coil; a temperature sensor configured to sense a first temperature and a second temperature; and a controller configured to drive the first inverter circuit and the second inverter circuit increasing or decreasing the electric power that is supplied to the first coil or the second coil.

### Citation List

### Patent Literature

Patent Literature 1: Japanese Patent No. 5495960

### Summary of Invention

### Technical Problem

The existing induction cooking heater inductively heats an object to be heated, in which ingredients, or the like, are put, with the plurality of coils. However, there has been a problem that, even though the electric power is supplied to all of the plurality of coils, the temperatures of ingredients are not uniform depending on the shapes, placed locations, or other factors, of the ingredients and, as a result, temperature nonuniformity occurs among the ingredients.

The present invention is made to overcome problems as described above, and provides an induction cooking heater that is able to reduce temperature nonuniformity among ingredients put in an object to be heated.

### Solution to Problem

An induction cooking heater according to one embodiment of the present invention includes a top plate, a first coil, a second coil, a first inverter circuit, a second inverter circuit, a temperature sensor, and a controller. An object to be heated is placed on the top plate. The first coil and the second coil are disposed under the top plate. The first inverter circuit is configured to supply electric power to the first coil. The second inverter circuit is provided separately from the first inverter circuit. The second inverter circuit is configured to supply electric power to the second coil. The temperature sensor is configured to sense a first top surface temperature and a second top surface temperature. The first top surface temperature is a temperature of a top surface, at a location above the first coil, of the object to be heated. The second top surface temperature is a temperature of a top surface, at a location above the second coil, of the object to be heated. A second temperature sensor is configured to sense a first bottom surface temperature and a second bottom surface temperature, the first bottom surface temperature being a temperature of a bottom surface, at a location above the first coil, of the object to be heated, the second bottom surface temperature being a temperature of a bottom surface, at a location above the second coil, of the object to be heated. The controller is configured to drive the first inverter circuit and the second inverter circuit increasing or decreasing the electric power that is supplied to the first coil or the second coil such that a difference between a first temperature difference and a second temperature difference reduces, the first temperature difference is a temperature difference between the first bottom surface temperature and the first top surface temperature, and the second temperature difference is a temperature difference between the second bottom surface temperature and the second top surface temperature.

### Advantageous Effects of Invention

The embodiment of the present invention is able to reduce temperature nonuniformity among ingredients put in an object to be heated by driving the first inverter circuit and the second inverter circuit such that a difference between a first top surface temperature and a second top surface temperature reduces.

### Brief Description of Drawings

[Fig. 1] Fig. 1 is a perspective view that shows the overall configuration of an induction cooking heater according to Embodiment 1.
[Fig. 2] Fig. 2 is a view that shows a first heating unit of the induction cooking heater according to Embodiment 1.
[Fig. 3] Fig. 3 is a block diagram that shows driving circuits of the first heating unit of the induction cooking heater according to Embodiment 1.
[Fig. 4] Fig. 4 is a side sectional view that schematically shows locations at which temperatures are sensed by a top surface temperature sensor of the induction cooking heater according to Embodiment 1.
[Fig. 5] Fig. 5 is a plan view that schematically shows locations at which temperatures are sensed by the top surface temperature sensor of the induction cooking heater according to Embodiment 1.
[Fig. 6] Fig. 6 is a plan view that shows an object to be heated, placed on a top plate of the induction cooking heater according to Embodiment 1.
[Fig. 7] Fig. 7 is a flowchart that shows a heating operation of the induction cooking heater according to Embodiment 1.
[Fig. 8] Fig. 8 is a plan view that shows a first heating unit and bottom surface temperature sensors of an induction cooking heater according to Embodiment 2.
[Fig. 9] Fig. 9 is a side sectional view that schematically shows locations at which temperatures are sensed by a top surface temperature sensor of the induction cooking heater according to Embodiment 2 and locations at which temperatures are sensed by the bottom surface temperature sensors of the induction cooking heater according to Embodiment 2.
[Fig. 10] Fig. 10 is a flowchart that shows a heating operation of the induction cooking heater according to Embodiment 2.
[Fig. 11] Fig. 11 is a flowchart that shows a heating operation of an induction cooking heater according to Embodiment 3.
[Fig. 12] Fig. 12 is a flowchart that shows a heating operation of an induction cooking heater according to Embodiment 4.
[Fig. 13] Fig. 13 is a view that shows an alternative embodiment of the first heating unit of the induction cooking heater.
[Fig. 14] Fig. 14 is a perspective view that shows the schematic configuration of an induction cooking heater according to Embodiment 5.
[Fig. 15] Fig. 15 is a view that illustrates mapping information of the induction cooking heater according to Embodiment 5.

### Description of Embodiments

Embodiment 1 and embodiment 5 do not form part of the invention, but are merely used for a better understanding of the current application.

### Embodiment 1.

### (Overall Configuration)

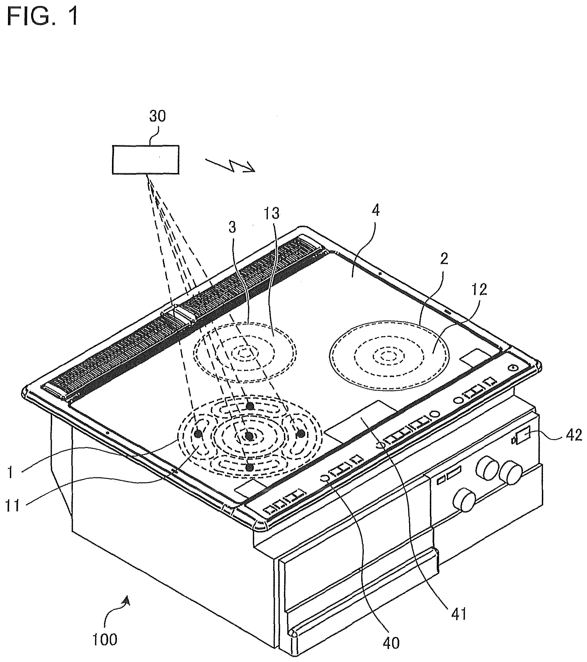

Fig. 1 is a perspective view that shows the overall configuration of an induction cooking heater according to Embodiment 1.

As shown in Fig. 1, the induction cooking heater 100 includes a top plate 4 at its upper part. An object to be heated is placed on the top plate 4. The object to be heated includes a pot, a frying pan, or other cookware, in which ingredients are put. The top plate 4 has a first heating port 1, a second heating port 2, and a third heating port 3 as heating ports for inductively heating objects to be heated. A first heating unit 11, a second heating unit 12, and a third heating unit 13 each are provided in association with a corresponding one of the heating ports. Each of the heating ports is able to inductively heat an object to be heated when the object to be heated is placed on the heating port.

Round-shaped marks that indicate rough locations for pots to be placed are provided on the top plate 4 by printing, application, of a paint or the like, in association with heating ranges (heating ports) of the first heating unit 11, second heating unit 12, and third heating unit 13. The layout of the heating ports is not limited thereto. In addition, the number of the heating ports is not limited to three, and may be any number.

An operating unit 40 is provided at the front side of the top plate 4. The operating unit serves as an input device for setting an input heating power (input electric power) or a cooking mode (such as a water boiling mode and a frying mode) at the time when an object to be heated is heated by the first heating unit 11, the second heating unit 12, or the third heating unit 13. In addition, a display unit 41 is provided near the operating unit 40. The display unit 41 displays an operational status of the induction cooking heater 100, details of input and operation through the operating unit 40, or other information.

The first heating unit 11, the second heating unit 12, and the third heating unit 13 are provided under the top plate 4 inside the induction cooking heater 100. Each of the heating units may be a coil. The coil is formed by winding a conductive wire coated with an electrically insulating layer and made of a metal (such as copper and aluminum). When a high-frequency current is supplied to any one of the coils by a corresponding one of inverter circuits 50 (described later), high-frequency magnetic field is generated by the any one of the coils.

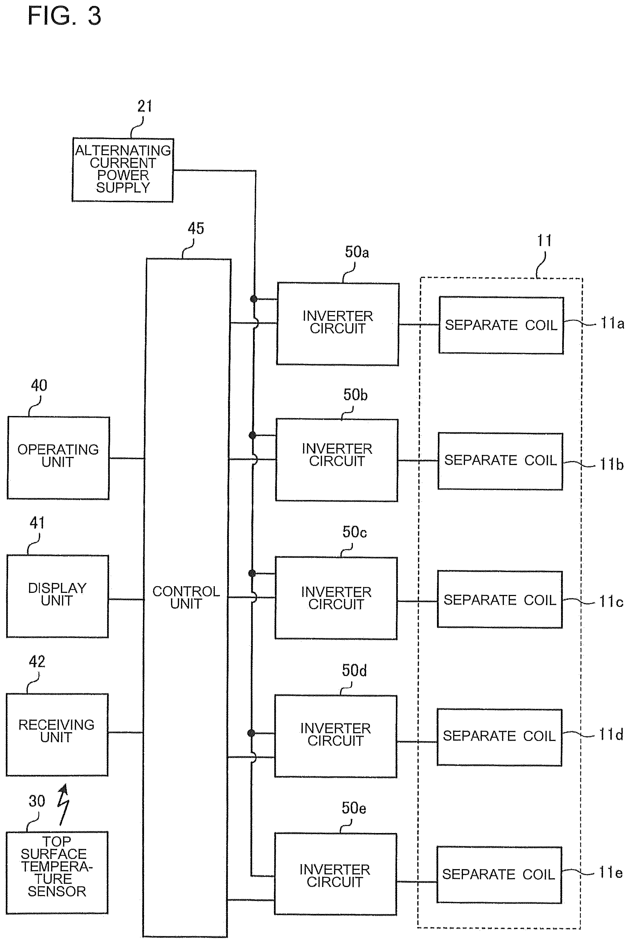

In addition, a controller 45 (see Fig. 3) is provided inside the induction cooking heater 100. The controller 45 is used to control the operation of the entire induction cooking heater, including the inverter circuits 50.

A top surface temperature sensor 30 is installed above the top plate 4. The top surface temperature sensor 30 includes noncontact temperature sensors. The top surface temperature sensor 30 senses the temperature of the top surface of an object to be heated, placed on the top plate 4, or the temperature of the top surface of an ingredient. Information about temperatures sensed by the top surface temperature sensor 30 is received by a receiving unit 42. The receiving unit 42 is provided at the front face of the induction cooking heater 100. For example, the top surface temperature sensor 30 may be attached to a housing of a ventilation fan provided above the induction cooking heater 100 or may be attached to a wall on which the induction cooking heater 100 is installed. The top surface temperature sensor 30 may be, for example, of a type in which the top surface temperature sensor 30 is incorporated in an interlocking system for a ventilation fan, installed above the induction cooking heater 100. The details of the top surface temperature sensor 30 will be described later. The disposition of the receiving unit 42 is not limited to the front face of the induction cooking heater 100, and may be the top face of the induction cooking heater 100 (the face of the top plate 4). The disposition of the receiving unit 42 may be any location as long as the receiving unit 42 can communicate with the top surface temperature sensor 30.

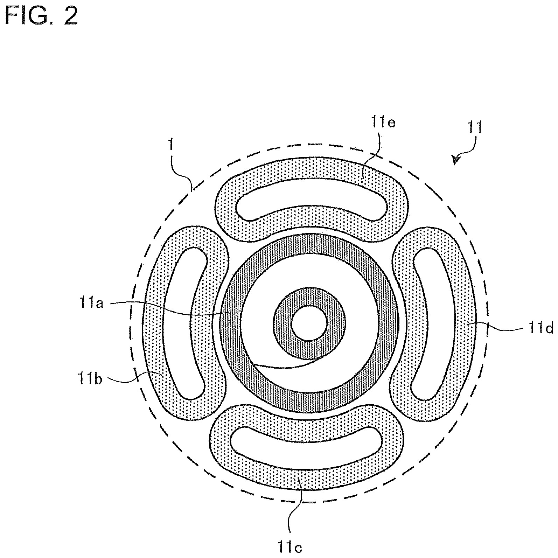

Fig. 2 is a view that shows the first heating unit of the induction cooking heater according to Embodiment 1.

In Fig. 2, the first heating unit 11 includes a plurality of separate coils 11a to 11e. The separate coil 11a is disposed at the center of the first heating port 1. The separate coils 11b to 11e are disposed around the separate coil 11a.

The separate coil 11a has a round-shaped planar shape, and is formed by winding a conductive wire in a circumferential direction. The conductive wire is coated with an electrically insulating layer, and is made of a selected metal (such as copper and aluminum). In the example shown in Fig. 2, the single separate coil 11a is formed by serially connecting two coils disposed substantially in a concentric manner.

The separate coils 11b to 11e are disposed around the separate coil 11a substantially along the outline of the round-shaped shape of the separate coil 11a. Each of the four separate coils 11b to 11e has substantially a quarter round-shaped arc (banana-like or cucumber-like) planar shape, and is formed by winding a conductive wire substantially in a quarter round-shaped arc shape. The conductive wire is coated with an electrically insulating layer, and is made of a selected metal (such as copper and aluminum).

In the following description, the plurality of separate coils 11a to 11e is simply referred to as separate coils when not distinguished from one another.

The number of the separate coils that constitute the first heating unit 11 is not limited to five. In addition, the shapes of the separate coils are also not limited thereto. For example, all the separate coils 11b to 11e may have a round-shaped shape.

Fig. 3 is a block diagram that shows driving circuits of the first heating unit of the induction cooking heater according to Embodiment 1.

As shown in Fig. 3, each of the separate coils 11a to 11e of the first heating unit 11 is independently driven by a corresponding one of the inverter circuits 50a to 50e.

An alternating-current power supply (commercial power supply) 21 is connected to the inverter circuits 50a to 50e via a rectifier circuit (not shown). An alternating-current voltage input from the alternating-current power supply 21 is rectified, and then each of the inverter circuits 50a to 50e converts the rectified alternating-current voltage to attain a high-frequency alternating-current power of, for example, approximately 20 kHz to approximately 100 kHz and outputs the high-frequency alternating-current power.

The controller 45 includes a microcomputer, a digital signal processor (DSP), or another device. The controller 45 controls each of the inverter circuits 50a to 50e based on contents of operation, or the like, through the operating unit 40. In addition, the controller 45 displays an operational status or other information on the display unit 41. In addition, information about the temperatures, received from the top surface temperature sensor 30 by the receiving unit 42, is input to the controller 45. The controller 45 controls each of the inverter circuits 50a to 50e based on information about the temperatures, input from the receiving unit 42.

The receiving unit 42 includes a communication device that carries out wireless communication with the top surface temperature sensor 30.

The receiving unit 42 is, for example, a wireless communication interface that is compliant with a selected communication standard, such as Wi-Fi (registered trademark), Bluetooth (registered trademark), and infrared communication. Communication between the receiving unit 42 and the top surface temperature sensor 30 may be carried out not only by wireless connection but also by wired connection.

### (Sensing of Temperatures by Top Surface Temperature sensor 30)

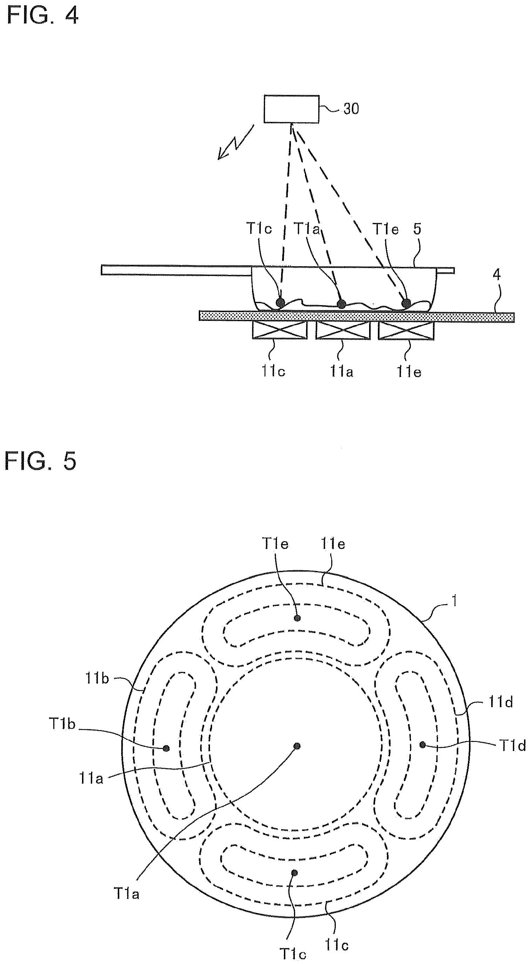

Fig. 4 is a side sectional view that schematically shows locations at which temperatures are sensed by the top surface temperature sensor of the induction cooking heater according to Embodiment 1.

Fig. 5 is a plan view that schematically shows locations at which temperatures are sensed by the top surface temperature sensor of the induction cooking heater according to Embodiment 1.

As shown in Fig. 4 and Fig. 5, the top surface temperature sensor 30 is configured to sense top surface temperatures T1a to T1e. The top surface temperatures T1a to T1e are the temperatures of a top surface of an object to be heated 5 or top surfaces of ingredients put in the object to be heated 5, at locations above the separate coils 11a to 11e.

For example, the top surface temperature sensor 30 includes a plurality of infrared ray sensors each are provided in association with a corresponding one of the separate coils 11a to 11e. The top surface temperature sensor 30 senses a temperature at a location above each of the separate coils 11a to 11e with a method of using infrared rays. That is, the top surface temperature sensor 30 is configured to sense the temperatures, at measurement locations above the top plate 4, of objects with the use of temperature sensors or other sensors having high directivity. The top surface temperature sensor 30 senses the temperature of a top surface of the object to be heated 5 when the object to be heated 5 is placed on the top plate 4, and senses the temperature of a top surface of an ingredient when the ingredient, or the like, is put in the object to be heated 5.

Pieces of information about the temperatures detected by the top surface temperature sensor 30 are transmitted to the receiving unit 42 together with pieces of information that identify the sensed locations. The controller 45 associates the pieces of information about the temperatures, acquired through the receiving unit 42, with the pieces of information that identify the sensed locations, and determines the top surface temperatures T1a to T1e each associated with a corresponding one of the separate coils 11a to 11e.

The method of sensing temperatures by the top surface temperature sensor 30 is not limited to the method using infrared rays. Any method of sensing temperatures may be used as long as the method is used to sense the top surface temperatures of the object to be heated 5 in a noncontact manner.

### (Operation)

Next, the operation of the induction cooking heater 100 in Embodiment 1 will be described.

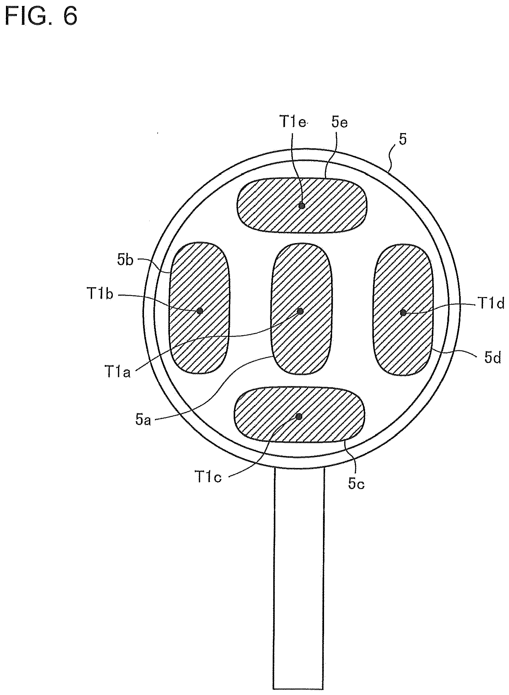

Fig. 6 is a plan view that shows the object to be heated, placed on the top plate of the induction cooking heater according to Embodiment 1.

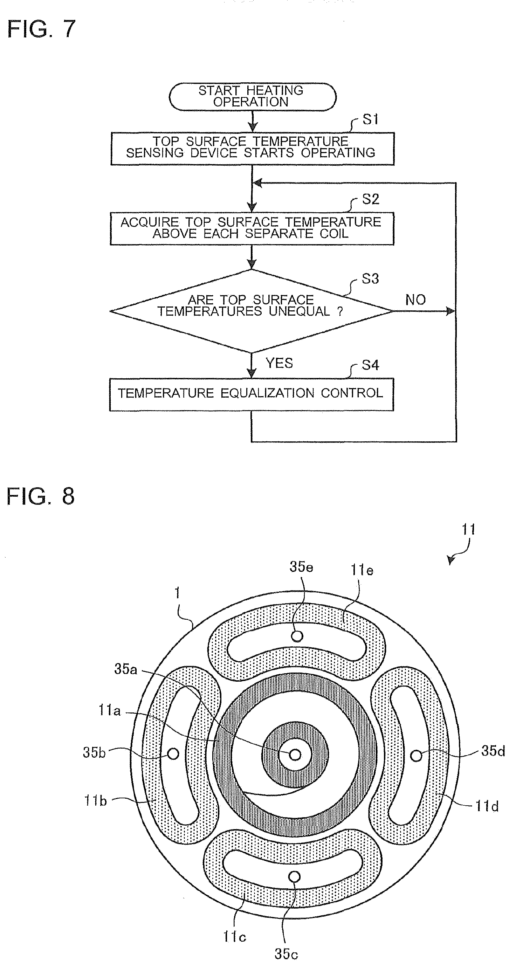

Fig. 7 is a flowchart that shows the heating operation of the induction cooking heater according to Embodiment 1.

Hereinafter, the heating operation will be described with reference to Fig. 6 based on steps in Fig. 7.

As a user turns on the power of the induction cooking heater 100 and, for example, presses down a heating start button to start the heating operation, the controller 45 starts the heating operation.

In starting the heating operation, when the user has started the operation to heat the object to be heated 5 at a desired heating power such as 3000 W, the controller 45 drives the inverter circuits 50a to 50e so that a heating power of 600 W can be input to each of the separate coils 11a to 11e. Thus, a heating power of 3000 W in total is applied to the object to be heated 5. That is, when the heating operation is started, the controller 45 drives the inverter circuits 50a to 50e such that electric powers that are supplied to the separate coils 11a to 11e are the same.

As the heating operation is started, the top surface temperature sensor 30 starts operating, and starts sensing temperatures at preset sensing locations (S1). For example, as shown in Fig. 6, when a plurality of ingredients 5a to 5e, such as Hamburg steaks, is put in the object to be heated 5, such as a frying pan, the top surface temperature sensor 30 senses the top surface temperatures T1a to T1e of the ingredients 5a to 5e at the locations of the separate coils 11a to 11e.

The example shown in Fig. 6 shows a case where ingredients are placed over all the separate coils 11a to 11e; however, the placement of ingredients is not limited to this placement. When no ingredient is placed, the top surface temperature sensor 30 senses the top surface temperature of the object to be heated 5.

The controller 45 acquires, for example, pieces of information about the temperatures, received from the top surface temperature sensor 30 by the receiving unit 42, and acquires the top surface temperatures T1a to T1e (S2). The top surface temperatures T1a to T1e are the temperatures of top surfaces of the object to be heated 5 or ingredients put in the object to be heated 5 at the locations above the separate coils 11a to 11e.

Subsequently, the controller 45 determines whether the top surface temperatures T1a to T1e are unequal (S3).

When a plurality of ingredients is put in the object to be heated 5, even when electric powers that are supplied to the separate coils 11a to 11e are the same, the top surface temperatures of the ingredients can be unequal depending on the thickness of each ingredient and placed locations of the ingredients relative to the separate coils.

The controller 45 determines whether the temperatures of the ingredients are unequal by comparing the plurality of top surface temperatures T1a to T1e with one another. For example, one of the plurality of top surface temperatures is compared with another one of the top surface temperatures, and, when a temperature difference is larger than or equal to a threshold, the controller 45 determines that the top surface temperatures are unequal.

When the top surface temperatures T1a to T1e are not unequal in step S3, the controller 45 resumes to step S2, and repeats the above-described operation.

On the other hand, when the top surface temperatures T1a to T1e are unequal in step S3, the controller 45 executes temperature equalization control (S4).

### (Temperature Equalization Control)

In temperature equalization control, the controller 45 controls each of the inverter circuits 50a to 50e such that differences among the top surface temperatures T1a to T1e are reduced. For example, the following control is executed as the temperature equalization control. After execution of the temperature equalization control, the controller 45 resumes to step S2 again, and repeats the above-described operation.

### (1) Control for Increasing Electric Power That Is Supplied to Separate Coil for Low Top Surface Temperature

For example, when the top surface temperature T1a of the ingredient placed above the separate coil 11a is 40 degrees C and the top surface temperatures T1b to T1e of the ingredients placed above the other separate coils 11b to 11e are 50 degrees C, the controller 45 determines that the temperature of the ingredient above the separate coil 11a is low. In this case, the controller 45 drives the inverter circuit 50a such that an electric power (input heating power) that is supplied to the separate coil 11a is increased.

For example, the controller 45 increases the input heating power to the separate coil 11a from 600 W to 750 W. Then, as the top surface temperature T1a substantially agrees with the top surface temperatures T1 at the other locations, the controller 45 resumes the input heating power back to the separate coil 11a to 600 W.

Because an upper limit is set for an input heating power of one heating port, the controller 45 may execute control such that the sum of input heating powers to the separate coils 11a to 11e is lower than the upper limit.

For example, when the upper limit of the sum of input heating powers to one heating port is 3000 W, the sum of input electric powers is 3150 W when the input heating power to the separate coil 11a is increased from 600 W to 750 W. For this reason, the controller 45, for example, may execute control such that the sum of input heating powers becomes 3000 W by equally decreasing the input heating powers to the separate coils 11b to 11e. That is, the controller 45 may execute demand control for increasing an input heating power to the separate coil associated with a low top surface temperature T1 and reducing an input heating power to the separate coil associated with a high top surface temperature T1.

When a desired heating power of the user is lower than or equal to the upper limit (for example, 2000 W), the controller 45 does not need to execute demand control.

### (2) Control for Reducing Electric Power That Is Supplied to Separate Coil Associated with High Top Surface Temperature

For example, when the top surface temperature T1a of the ingredient placed above the separate coil 11a is 60 degrees C and the top surface temperatures T1b to T1e of the ingredients placed above the other separate coils 11b to 11e are 50 degrees C, the controller 45 determines that the temperature of the ingredient above the separate coil 11a is high. In this case, the controller 45 drives the inverter circuit 50a such that an electric power (input heating power) that is supplied to the separate coil 11a is reduced.

For example, the controller 45 reduces the input heating power to the separate coil 11a from 600 W to 500 W. Then, as the top surface temperature T1a substantially agrees with the top surface temperatures T1 at the other locations, the controller 45 resumes the input heating power back to the separate coil 11a to 600 W.

### (3) Control for Adjusting Plurality of Top Surface Temperatures to Maximum Value of Plurality of Top Surface Temperatures

The above (1) and (2) describe control in the case where the top surface temperature T1 at one location of the ingredients above the separate coils is higher than or lower than the top surface temperatures T1 at the other locations of the ingredients. When all or part of the temperatures at five locations of the separate coils 11a to 11e do not agree with one another, the following control may be executed.

For example, when the top surface temperature T1a is 60 degrees C and the top surface temperatures T1b to T1e are lower than 60 degrees C, the controller 45 determines that the top surface temperature T1a is the maximum value, and drives the inverter circuits 50b to 50e such that input heating powers to the separate coils 11b to 11e are increased.

The amount of increase in input heating power may be set based on, for example, a temperature difference between the maximum value of top surface temperatures and a top surface temperature T1 of the associated separate coil.

That is, as the temperature difference between the maximum value of top surface temperatures T1 and a top surface temperature T1 of the associated separate coil increases, the set amount of increase in input heating power is increased. Then, as the top surface temperature above the separate coil to which the input heating power is increased substantially agrees with the maximum value, the controller 45 resumes the input heating power to the separate coil back to the heating power set before the input heating power is increased.

### (4) Control for Adjusting Plurality of Top Surface Temperatures to Minimum Value of Plurality of Top Surface Temperatures

For example, when the top surface temperature T1a is 60 degrees C and the top surface temperatures T1b to T1e are higher than 60 degrees C, the controller 45 determines that the top surface temperature T1a is the minimum value, and drives the inverter circuits 50b to 50e such that input heating powers to the separate coils 11b to 11e are reduced.

The amount of reduction in input heating power may be set based on, for example, a temperature difference between the minimum value of top surface temperatures and a top surface temperature T1 of the associated separate coil. That is, as the temperature difference between the minimum value of top surface temperatures T1 and a top surface temperature T1 of the associated separate coil increases, the set amount of reduction in input heating power is increased. Then, as the top surface temperature above the separate coil to which the input heating power is reduced substantially agrees with the minimum value, the controller 45 resumes the input heating power back to the separate coil to the heating power set before the input heating power is reduced.

### (5) Control for Adjusting Plurality of Top Surface Temperatures to Average Value of Plurality of Top Surface Temperatures

For example, the controller 45 calculates the average value of the top surface temperatures T1b to T1e, and sets the input heating powers to the separate coils 11b to 11e such that each of the top surface temperatures T1b to T1e agrees with the average value. That is, the input heating power to the separate coil associated with the top surface temperature T1 lower than the average value is increased, and the input heating power to the separate coil associated with the top surface temperature T1 higher than the average value is reduced.

A setting value of input heating power may be set based on, for example, a temperature difference between the average value and a top surface temperature T1 above the separate coil for which the input heating power is set. That is, as the temperature difference between the average value of the top surface temperatures T1 and a top surface temperature T1 of the intended separate coil increases, the set amount of change in input heating power is increased.

### (6) Control for Adjusting to Target Temperature

For example, the controller 45 acquires a target temperature input through the operating unit 40 or a target temperature preset in a cooking menu, or the like, and sets the input heating powers to the separate coils 11b to 11e such that each of the top surface temperatures T1b to T1e agrees with the target temperature. That is, the input heating power to the separate coil associated with the top surface temperature T1 lower than the target temperature is increased, and the input heating power to the separate coil associated with the top surface temperature T1 higher than the target temperature is reduced.

A setting value of input heating power may be set based on, for example, a temperature difference between the target temperature and a top surface temperature T1 above the separate coil for which the input heating power is set. That is, as the temperature difference between the target value of the top surface temperatures T1 and a top surface temperature T1 of the intended separate coil increases, the set amount of change in input heating power is increased.

The temperature equalization control is not limited to the above (1) to (6). The controller 45 is able to drive each of the plurality of inverter circuits 50 such that temperature differences among the top surface temperatures T1 each associated with a corresponding one of the plurality of separate coils reduce, as the temperature equalization control.

In addition to the above-described operation, the following operation may be performed. That is, when at least one of the top surface temperatures T1a to T1e exceeds a preset upper limit, the controller 45 may take action, that is, stopping the heating operation or decreasing the heating power. Furthermore, the controller 45 may inform the user of an abnormality with the display unit 41.

In Embodiment 1, the case where the five separate coils 11a to 11e are provided for one heating port is described; however, the embodiment of the present invention is not limited thereto. At least two separate coils just need to be provided for one heating port.

Any one of the separate coils 11a to 11e corresponds to "a first coil" in the embodiment of the present invention, and another one of the separate coils 11b to 11e corresponds to "a second coil" in the embodiment of the present invention.

In addition, any one of the inverter circuits 50a to 50e corresponds to "a first inverter circuit" in the embodiment of the present invention, and another one of the inverter circuits 50a to 50e corresponds to "a second inverter circuit" in the embodiment of the present invention.

In addition, the top surface temperature sensor 30 corresponds to "a temperature sensor" in the embodiment of the present invention.

In addition, the object to be heated 5, ingredients put in the object to be heated 5, and the like, correspond to "an object to be heated" in the embodiment of the present invention.

As described above, in Embodiment 1, the top surface temperature sensor 30 that senses the top surface temperatures T1 of the object to be heated 5 or ingredients put in the object to be heated 5 is provided, and the controller 45 drives the plurality of inverter circuits 50 such that temperature differences among the top surface temperatures T1 each associated with a corresponding one of the plurality of separate coils reduce.

Therefore, unequal temperatures of the ingredients put in the object to be heated 5 are reduced. For example, when it is assumed that ingredients, such as Hamburg steaks, are heated with the object to be heated 5, such as a frying pan, the ingredients are heated to equal temperatures irrespective of a location at which the frying pan is placed relative to a heating port, the thickness of each ingredient, the locations of the ingredients in the frying pan, or other factors.

In addition, by reducing unequal temperatures of ingredients, overcooking or undercooking the ingredients is avoided, so the finish of cooking is improved.

Therefore, it is possible to equalize the degrees of finish of ingredients at the time of completion of cooking, so usability is improved.

### Embodiment 2.

In Embodiment 2, a configuration and operation for sensing a temperature difference in a direction (up-and-down direction) perpendicular to an ingredient will be described.

Hereinafter, the configuration and operation of the induction cooking heater 100 in Embodiment 2 will be described, focusing on a difference from Embodiment 1.

### (Configuration)

Fig. 8 is a plan view that shows the first heating unit and bottom surface temperature sensors of the induction cooking heater according to Embodiment 2.

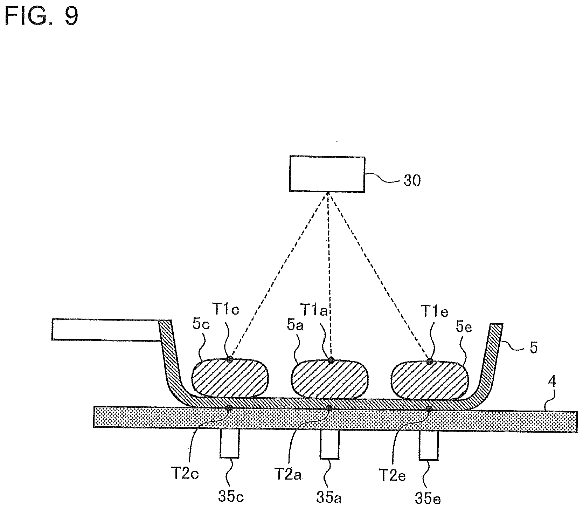

Fig. 9 is a side sectional view that schematically shows locations at which temperatures are sensed by the top surface temperature sensor and bottom surface temperature sensors of the induction cooking heater according to Embodiment 2. In Fig. 9, parts of the components are not shown. In addition, Fig. 9 shows a longitudinal section of the object to be heated 5, such as a frying pan, in which a plurality of ingredients 5a to 5e, such as Hamburg steaks, is put, and only shows the ingredients 5a, 5c, 5e.

As shown in Fig. 8 and Fig. 9, the bottom surface temperature sensors 35a to 35e are installed under the top plate 4. The bottom surface temperature sensors 35a to 35e sense the temperatures of bottom surfaces of the object to be heated, placed on the top plate 4, or ingredients. For example, each of the bottom surface temperature sensors 35a to 35e is disposed substantially at the center of a corresponding one of the separate coils 11a to 11e. The disposition of the bottom surface temperature sensors 35a to 35e is not limited to this disposition. Each of the bottom surface temperature sensors 35a to 35e just needs to be located near a corresponding one of the separate coils 11a to 11e. For example, the bottom surface temperature sensors 35a to 35e may be disposed in spaces between the separate coils 11a to 11e.

The bottom surface temperature sensors 35a to 35e are, for example, contact temperature sensors provided in contact with the bottom surface of the top plate 4. For example, thermistors may be used as the contact temperature sensors.

Each of the bottom surface temperature sensors 35a to 35e senses a corresponding one of bottom surface temperatures T2a to T2e. The bottom surface temperatures T2a to T2e are the temperatures of bottom surfaces of the object to be heated 5 or ingredients put in the object to be heated 5 at locations above the separate coils 11a to 11e. Pieces of information about the bottom surface temperatures T2a to T2e sensed by the bottom surface temperature sensors 35a to 35e are input to the controller 45. That is, because the temperatures of the bottom surfaces of the top plate 4, sensed by the bottom surface temperature sensors 35a to 35e, are substantially the same as the temperatures of the bottom surfaces of the object to be heated 5, the controller 45 acquires the temperatures of the bottom surfaces of the top plate 4 as the bottom surface temperatures T2 of the object to be heated 5. The controller 45 may correct the temperatures sensed by the bottom surface temperature sensors 35a to 35e in consideration of heat loss resulting from heat transfer of the top plate 4, and may use the corrected temperatures as the bottom surface temperatures T2.

The bottom surface temperature sensors 35a to 35e are not limited to contact temperature sensors. The bottom surface temperature sensors 35a to 35e may be noncontact temperature sensors. For example, infrared ray sensors or other sensors may be disposed under the top plate 4, and the infrared ray sensors or other sensors may sense infrared rays transmitted through the top plate 4. The temperatures of the bottom surfaces of the object to be heated 5 may be sensed in this manner.

### (Operation)

Next, the operation of the induction cooking heater 100 in Embodiment 2 will be described.

When the plurality of ingredients 5a to 5e, such as Hamburg steaks, is put in the object to be heated 5, such as a frying pan, the bottom surface temperature sensors 35a to 35e sense the bottom surface temperatures T2a to T2e of the ingredients 5a to 5e at the locations of the separate coils 11a to 11e. In addition, as in the case of Embodiment 1, the top surface temperature sensor 30 senses the top surface temperatures T1a to T1e of the ingredients 5a to 5e at the locations of the separate coils 11a to 11e.

The controller 45 obtains a temperature difference ΔT between the bottom surface temperature T2 and the top surface temperature T1 at the location of each of the separate coils 11a to 11e, and drives the inverter circuits 50a to 50e such that the temperature differences ΔT are equal among the ingredients 5a to 5e.

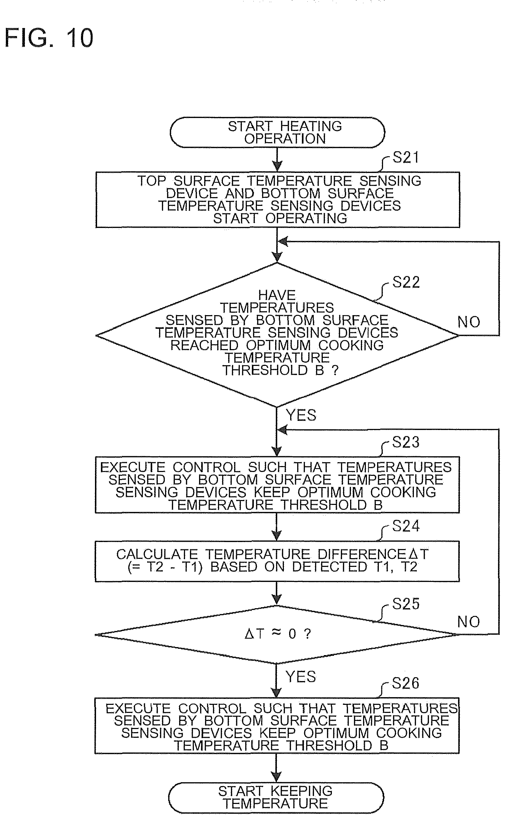

The details of such an operation will be described with reference to Fig. 10.

Fig. 10 is a flowchart that shows the heating operation of the induction cooking heater according to Embodiment 2. Hereinafter, description will be made based on steps in Fig. 10.

As a user turns on the power of the induction cooking heater 100 and, for example, presses down a heating start button to start the heating operation, the controller 45 starts the heating operation.

In starting the heating operation, when the user has started the operation to heat the object to be heated 5 at a desired heating power such as 3000 W, the controller 45 drives the inverter circuits 50a to 50e so that a heating power of 600 W can be input to each of the separate coils 11a to 11e. Thus, a heating power of 3000 W in total is applied to the object to be heated 5. That is, when the heating operation is started, the controller 45 drives the inverter circuits 50a to 50e such that electric powers that are supplied to the separate coils 11a to 11e are the same.

As the heating operation is started, the top surface temperature sensor 30 and the bottom surface temperature sensors 35 start operating (S21). For example, when the plurality of ingredients 5a to 5e is put in the object to be heated 5, the top surface temperature sensor 30 senses the top surface temperatures T1a to T1e of the ingredients 5a to 5e at the locations of the separate coils 11a to 11e. The bottom surface temperature sensors 35a to 35e sense the bottom surface temperatures T2a to T2e of the ingredients 5a to 5e at the locations of the separate coils 11a to 11e.

Subsequently, the controller 45 determines whether the bottom surface temperatures T2a to T2e sensed by the bottom surface temperature sensors 35a to 35e have reached a preset optimum cooking temperature threshold B (S22). When all the bottom surface temperatures T2a to T2e have reached the optimum cooking temperature threshold B, the controller 45 proceeds to step S23. When the bottom surface temperatures T2a to T2e have not all reached the optimum cooking temperature threshold B, the controller 45 repeats step S22.

In step S23, the controller 45 controls the inverter circuits 50a to 50e to reduce the input heating powers to the separate coils 11a to 11e such that the bottom surface temperatures T2a to T2e are kept at the optimum cooking temperature threshold B.

Subsequently, the controller 45 calculates the temperature difference ΔT (= T2 - T1) between the bottom surface temperature T2 and the top surface temperature T1 at the location of each of the separate coils 11a to 11e (S24).

Then, the controller 45 determines whether the temperature difference ΔT is substantially zero for each of the separate coils 11a to 11e (S25). For control over the separate coil at which the temperature difference ΔT is not substantially zero, the controller 45 resumes to step S23 and repeats the above-described operation.

For example, when the temperature difference ΔTa (= T2a - T1a) between the bottom surface temperature T2a and the top surface temperature T1a above the separate coil 11a is substantially zero (ATa ≈ 0), it is determined that there is substantially no temperature difference in the direction perpendicular to the ingredient 5a placed above the separate coil 11a and heat is sufficiently transferred to the inside of the ingredient 5a.

On the other hand, for example, when the temperature difference ΔTc (= T2c - T1c) between the bottom surface temperature T2c and the top surface temperature T1c above the separate coil 11c is not substantially zero (for example, ATc ≈ 20 degrees C), it is determined that there is a temperature difference in the direction perpendicular to the ingredient 5c placed above the separate coil 11c and the temperature of the top surface (surface) of the ingredient 5c is low.

For the separate coil for which it is determined in step S26 that the temperature difference ΔT is substantially zero, the controller 45 controls the inverter circuit 50 of that separate coil such that the bottom surface temperature T2 is kept at the optimum cooking temperature threshold B.

This control in step S26 is temperature keeping control in which the input heating powers to the separate coils are set so as to be lower than the input heating powers in step S23. For example, of 10 levels of heating power, the heating powers in step S23 are set to "5", and the heating powers in step S25 are set to "3".

### (Temperature Equalization Control)

In step S23, the controller 45 controls each of the inverter circuits 50a to 50e such that differences among the temperature differences ΔT of the ingredients 5a to 5e reduce.

In the above-described Embodiment 1, the inverter circuits 50 are controlled based on a comparison among the top surface temperatures T1 above the separate coils; whereas, in Embodiment 2, temperature equalization control is executed by using the temperature differences ΔT instead of the top surface temperatures T1. That is, in the temperature equalization controls (1) to (6) described in Embodiment 1, similar control is executed by using the temperature differences ΔT instead of the top surface temperatures T1.

For example, when the temperature difference ΔTa at the separate coil 11a is larger than the temperature differences ATb to ATe at the separate coils 11b to 11e, the controller 45 drives the inverter circuit 50a such that the input heating power to the separate coil 11a increases.

In addition, for example, when the temperature difference ΔTa at the separate coil 11a is smaller than the temperature differences ΔTb to ΔTe at the separate coils 11b to 11e, the controller 45 drives the inverter circuit 50a such that the input heating power to the separate coil 11a reduces.

Alternatively, for example, when the temperature difference ΔTa at the separate coil 11a is smaller than the temperature differences ATb to ΔTe at the separate coils 11b to 11e, the controller 45 drives the inverter circuits 50a to 50e such that the input heating power to the separate coil 11a reduces and the input heating powers to the separate coils 11b to 11e increase.

The temperature equalization control is not limited to the above-described (1) to (6). The controller 45 is able to drive each of the plurality of inverter circuits 50 such that differences among temperature differences ΔT each associated with a corresponding one of the separate coils reduce, as the temperature equalization control.

As described above, in Embodiment 2, the controller 45 obtains the temperature difference ΔT between the bottom surface temperature T2 and the top surface temperature T1 at the location of each of the separate coils 11a to 11e, and drives the inverter circuits 50a to 50e such that the temperature differences ΔT among the ingredients 5a to 5e are equal.

Therefore, unequal temperatures of the ingredients put in the object to be heated 5 in the direction perpendicular to the ingredients are reduced.

In addition, by executing temperature equalization control such that the temperature differences ΔT between the bottom surface temperatures T2 and the top surface temperatures T1 are equal, the timing of the finish of cooking of each of the plurality of ingredients put in the object to be heated 5 is brought to substantially the same timing.

In addition, for the separate coil for which it is determined that the temperature difference ΔT is substantially zero, the controller 45 controls the inverter circuit 50 of that separate coil such that the bottom surface temperature T2 is kept at the optimum cooking temperature threshold B.

Therefore, simultaneous control of temperature keeping control and heating control is implemented. That is, the finish of cooking is improved by executing heating control such that the temperature differences ΔT among ingredients are substantially zero, and simultaneous control over heating cooking and temperature keeping is possible in the single object to be heated 5. Thus, usability is significantly improved.

### Embodiment 3.

In Embodiment 3, the operation of sensing empty heating, that is, the heating operation is continued in a state where no ingredient is put in the object to be heated 5, will be described.

Hereinafter, the operation of the induction cooking heater 100 in Embodiment 3 will be described, focusing on a difference from Embodiment 1 or 2.

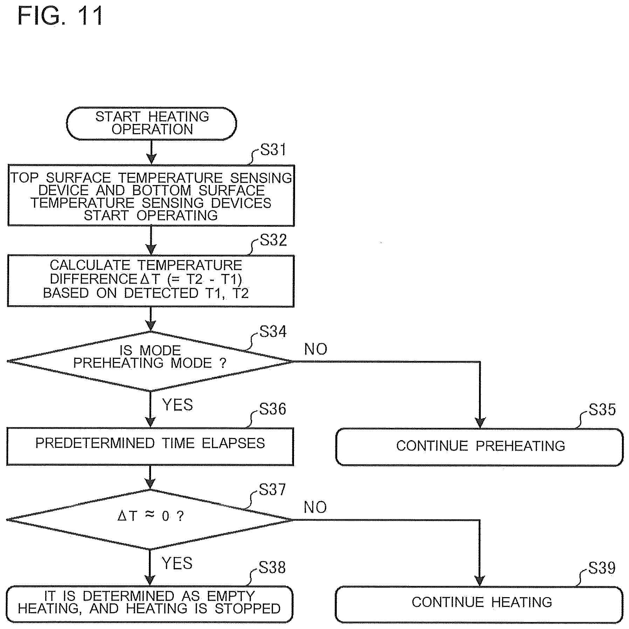

Fig. 11 is a flowchart that shows the heating operation of the induction cooking heater according to Embodiment 3. Hereinafter, description will be made based on steps in Fig. 11.

"A preheating mode" in which the temperature of the object to be heated 5 is heated to a set temperature is provided as an application of the induction cooking heater 100. Hereinafter, cooking modes other than "the preheating mode" are referred to as "normal modes".

### (Empty Heating Sensing Operation)

As a user turns on the power of the induction cooking heater 100 and, for example, presses down a heating start button to start the heating operation, the controller 45 starts the heating operation.

As the heating operation is started, the top surface temperature sensor 30 and the bottom surface temperature sensors 35 start operating (S31).

Subsequently, the controller 45 calculates the temperature difference ΔT (= T2 - T1) between the bottom surface temperature T2 and the top surface temperature T1 at the location of each of the separate coils 11a to 11e (S32).

The controller 45 determines whether the cooking mode is the preheating mode (S34). When the cooking mode is the preheating mode, the controller 45 proceeds to step S35, and continues preheating operation in the preheating mode (S35). That is, since the preheating mode is understood as a cooking mode in which empty heating is performed, the following operation is not executed.

On the other hand, when the cooking mode is not the preheating mode, that is, when the cooking mode is the normal mode, the controller 45 waits predetermined elapsed time (for example, one minute) from the start of heating (S36), and proceeds to step S37.

In step S37, the controller 45 determines for each of the separate coils 11a to 11e whether the temperature difference ΔT is substantially zero. For example, when the temperature difference ΔT is smaller than a preset threshold (for example, 1 degree C), the controller 45 determines that the temperature difference ΔT is substantially zero.

When all the temperature differences ΔTa to ATe at the separate coils 11a to 11e are substantially zero, the controller 45 determines that no ingredient is put in the object to be heated 5, that is, empty heating, and stops the heating operation (S38).

On the other hand, when the temperature differences ΔTa to ΔTe at the separate coils 11a to 11e are not all substantially zero, the controller 45 determines that an ingredient or ingredients are placed in the object to be heated 5, and continues the heating operation (S39).

In step S37, it is determined whether all the temperature differences ΔTa to ATe at the separate coils 11a to 11e are substantially zero; however, determination as to empty heating is not limited thereto. Determination as to empty heating may be carried out by using only part of the temperature differences ΔT. For example, when the temperature difference ΔTa at the separate coil 11a disposed at the center in the heating port is substantially zero, it may be determined as empty heating, and heating may be stopped.

When the heating operation is continued after the empty heating sensing operation in Embodiment 3, the controller 45 shifts into the operation of Embodiment 1 or 2, and executes control for equalizing the temperatures of the ingredients.

As described above, in Embodiment 3, when the temperature difference ΔT after the predetermined elapsed time from the start of driving of the inverter circuit 50 is smaller than the threshold, the inverter circuit 50 is stopped.

Therefore, before the temperature of the object to be heated 5 reaches a high temperature, an empty heating state of the object to be heated 5 is sensed. Thus, no unnecessary heating is continued, so energy saving is achieved. In addition, the degradation of the object to be heated 5 is prevented.

In sensing of empty heating with an existing induction cooking heater, for example, the temperature of the object to be heated 5 is sensed by also using a temperature sensor (such as an infrared ray sensor and a thermistor) under the top plate 4, and, when the object to be heated 5 has reached a sufficiently high temperature (for example, 300 degrees C), it is determined as empty heating and heating is stopped.

### Embodiment 4.

In Embodiment 4, the operation of controlling the driving frequency of each of the inverter circuits 50 will be described.

Hereinafter, the operation of the induction cooking heater 100 in Embodiment 4 will be described, focusing on a difference from Embodiment 1, 2, or 3.

In general, some of the objects to be heated 5 for an induction cooking heater are made by thermally spraying or bonding a magnetic metal to the center of a non-magnetic metal. There are many frying pans including, for example, a bonded frying pan in which a magnetic metal, such as stainless steel, is bonded to the center of the bottom of a frying pan made of a non-magnetic aluminum material, a thermally sprayed frying pan in which the bottom of a frying pan is coated with a magnetic material, such as iron, and other frying pans.

When the object to be heated 5 made of different types of metal is placed on the heating port, if the driving frequency of the separate coil 11a disposed at the center of the heating port and the driving frequencies of the separate coils 11b to 11e disposed around the separate coil 11a are set to the same frequency or proximate frequencies, the center portion (radially inner portion) and the radially outer portion (surrounding portion) cannot be heated at the same temperature. That is, only the center portion of the object to be heated 5, at which a magnetic material such as iron is thermally sprayed to the bottom surface, is inductively heated, and the temperature of the non-magnetic surrounding portion of the object to be heated 5 does not increase as compared to the center portion. To heat the surrounding portion made of a non-magnetic aluminum material, the inverter circuits need to be driven at a high frequency (generally, 60 kHz to 100 kHz) as compared to a normal inverter driving frequency (approximately 20 kHz to approximately 30 kHz).

The operation of inductively heating the object to be heated 5 made of such different types of metal will be described below.

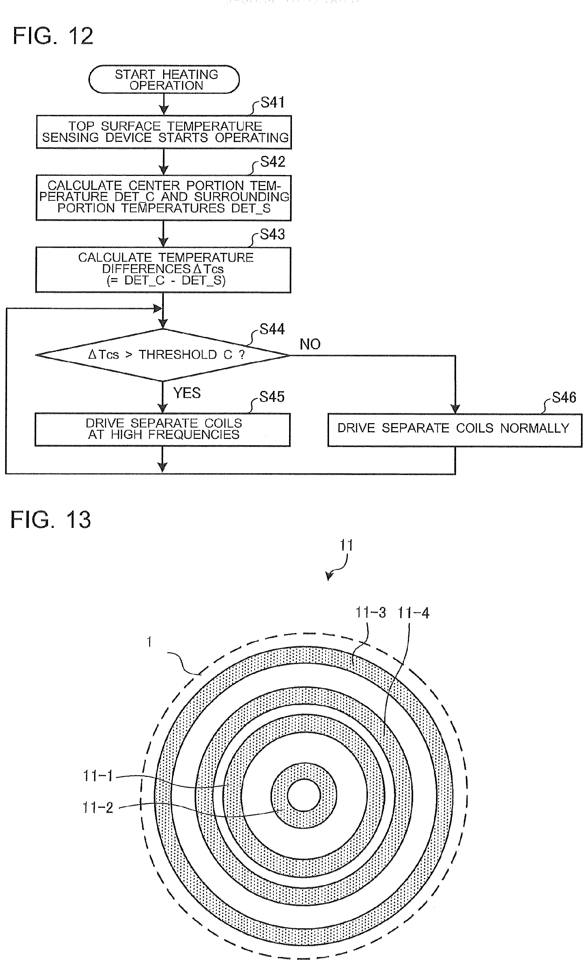

Fig. 12 is a flowchart that shows the heating operation of the induction cooking heater according to Embodiment 4. Hereinafter, description will be made based on steps in Fig. 12.

As the heating operation is started, the top surface temperature sensor 30 starts operating (S41).

Subsequently, the controller 45 acquires the top surface temperature T1a at the separate coil 11a disposed at the center of the heating port as a center portion temperature DET_C. In addition, the controller 45 acquires the top surface temperatures T1b to T1e at the separate coils 11b to 11e disposed at the radially outer portion (surrounding portion) of the heating port as surrounding portion temperatures DET_S (S42).

Subsequently, the controller 45 calculates a difference ΔTcs between the center portion temperature DET_C and each of the surrounding portion temperatures DET_S (S43). Then, the controller 45 determines whether the difference ΔTcs is larger than a threshold C (S44).

When the difference ΔTcs is larger than the threshold C, the controller 45 determines that the object to be heated 5 is a bonded pan or pot, and set the driving frequencies of the separate coils 11b to 11e higher than the driving frequency of the separate coil 11a. For example, heating of the surrounding portion is made available by increasing the driving frequencies of the separate coils 11b to 11e from approximately 25 kHz to approximately 75 kHz. The amount of increase in driving frequency may be a preset amount of frequency or may be set to a frequency commensurate with the difference ΔTcs. When the driving frequency is set to a high frequency, a resonance capacitor (not shown) that constitutes each of the inverter circuits 50 also needs to be changed.

On the other hand, when the difference ΔTcs is not larger than the threshold C, the controller 45 normally drives the separate coils at the same driving frequency (S46).

As described above, in Embodiment 4, the top surface temperature of the center portion is compared with the top surface temperature of the surrounding portion, and, only when the top surface temperature of the surrounding portion does not increase, it is determined that the object to be heated is a bonded pan or port, and then the inverter circuits 50 of the separate coils at the surrounding portion are driven at high frequencies.

Therefore, inverter driving frequencies are not determined uniquely based on the material of the object to be heated 5, and the inverter driving frequencies are determined based on the top surface temperatures of ingredients. Thus, even when the surrounding portion is made of an aluminum material, but when the temperatures of ingredients at the surrounding portion are high as a result of heat transfer of the object to be heated 5, high-frequency driving is not needed, so an increase in the loss of the inverter circuits 50 or an increase in the loss of the separate coils is avoided. Therefore, an outlet temperature of cooing air for heat generation of the inverter circuits 50 is decreased, so usability is improved.

In addition, Si (silicon) elements, such as IGBTs, have been employed as existing switching devices that constitute each inverter circuit 50. When SiC (silicon carbide) elements that are wide band gap semiconductors are employed, the outlet temperature is further decreased, so further improvement in usability is possible. Furthermore, when SiC (silicon carbide) elements are employed, the velocity of cooling air is decreased without changing the discharge temperature, so silencing is achieved.

In addition, since not the material of the surrounding portion is determined as aluminum by determining a load on the object to be heated 5 but the driving frequencies are changed based on a comparison between the temperature of the center portion and the temperature of the surrounding portion, when the temperature of the surrounding portion is increased as a result of heat transfer although the object to be heated is a bonded pan or pot, the separate coils 11b to 11e are not driven at high frequencies.

Therefore, the bottom surface of the bonded pan or pot is substantially uniformly heated, so usability of the user is improved. In addition, high-frequency driving is performed only when the surrounding portion temperature of the bottom surface does not increase, so the loss of the inverter circuits 50 is reduced.

### (Alternative Embodiment)

In Embodiments 1 to 4, the structure that includes the separate coil 11a disposed at the center of the first heating port 1 and the separate coils 11b to 11e disposed around the separate coil 11a is described; however, the disposition of the separate coils 11a to 11e is not limited thereto. Any disposition is applicable.

Fig. 13 is a view that shows an alternative embodiment of the first heating unit of the induction cooking heater.

As shown in Fig. 13, the first heating unit 11 includes a plurality of coils disposed substantially in a concentric manner. For example, the first heating unit 11 includes quadruple coils 11-1 to 11-4 disposed substantially in a concentric manner. These coils 11-1 to 11-4 each are formed by winding a conductive wire coated with an electrically insulating layer and made of a selected metal (such as copper and aluminum). Each of these coils 11-1 to 11-4 is driven by a corresponding one of the independent inverter circuits 50a to 50d.

With such a configuration as well, a similar operation to that of any one of the above-described Embodiments 1 to 4 is obtained.

### Embodiment 5.

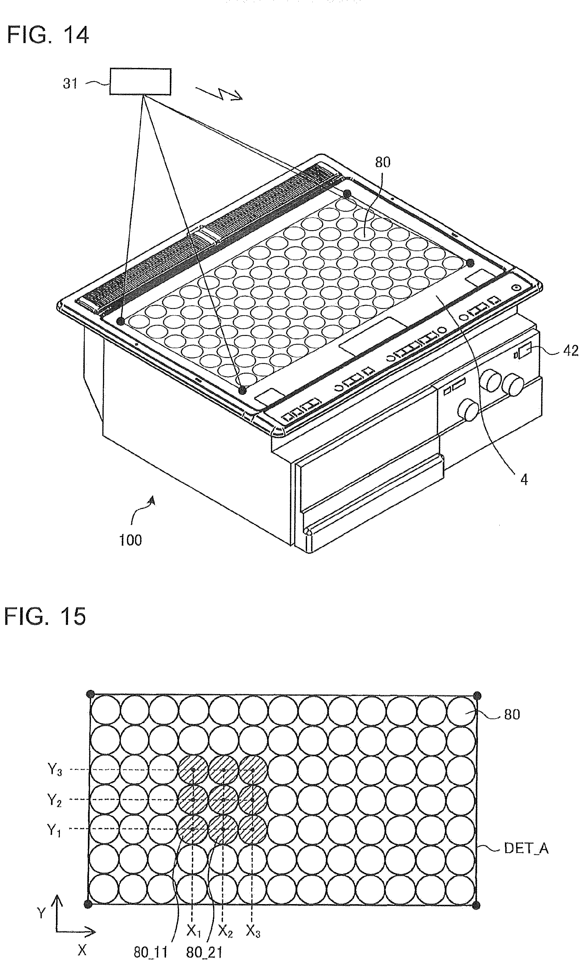

Fig. 14 is a perspective view that shows the schematic configuration of the induction cooking heater according to Embodiment 5.

As shown in Fig. 14, in the induction cooking heater 100 according to Embodiment 5, a plurality of relatively compact coils 80 is substantially disposed under the top plate 4 in a uniformly distributed manner. Each of the plurality of coils 80 is independently driven by a corresponding one of the inverter circuits 50.

In addition, the controller 45 in Embodiment 5 determines a load on an object to be heated, placed above the plurality of coils 80, for each of the coils 80.

In addition, instead of the above-described top surface temperature sensor 30, a top surface temperature sensor 31 is provided. The top surface temperature sensor 31 senses the temperatures of a temperature sensing range DET_A (see Fig. 15) including all the locations on the top plate 4, at which the plurality of coils 80 is disposed. That is, the top surface temperature sensor 31 includes a compound-eye infrared temperature sensor. The compound-eye infrared temperature sensor is able to detect the temperature of an ingredient placed in the object to be heated 5 wherever the object to be heated 5 is placed on the top plate 4. The top surface temperature sensor 31 transmits pieces of information about temperatures in the front-and-back direction and right-and-left direction (X-axis and Y-axis directions) of the top plate 4 to the receiving unit 42. For example, the top surface temperature sensor 31 transmits pieces of information about temperatures at coordinates in the X-axis and Y-axis directions to the receiving unit 42.

Fig. 15 is a view that illustrates mapping information of the induction cooking heater according to Embodiment 5.

Fig. 15 shows a positional relation between the temperature sensing range DET_A, in which temperatures are sensed by the top surface temperature sensor 31, and the plurality of coils 80.

The controller 45 has mapping information in advance. The mapping information identifies each of the plurality of coils 80 in the X-Y coordinates of the temperature sensing range DET_A. For example, as shown in Fig. 15, the controller 45 includes information that associates the coordinates of the top surface temperature sensor 31 with the plurality of coils 80 so as to identify that the coil 80_11 is disposed at the location of X1 ,Y1 and identify that the coil 80_21 is disposed at the location of X2,Y1 in the X-Y coordinates of the temperature sensing range DET_A.

This mapping information is not limited to the one saved in advance. For example, the object to be heated 5 may be placed over a wide range on the top plate 4 or a heating metal sheet may be placed on the top plate 4, and mapping information that identifies the plurality of coils 80 and coordinate relations may be generated based on locations at which temperatures have increased at the time when the plurality of coils 80 is sequentially energized individually.

### (Operation)

As a user places the object to be heated 5 at a selected location of the top plate 4 and conducts the operating unit 40 to issue instructions to start heating (input heating power), the controller 45 executes a load determination process. The controller 45 executes a load determination process for determining whether there is a load placed above for each of the plurality of coils 80.

Subsequently, the controller 45 executes heating operation to supply a high-frequency electric power commensurate with a heating power for induction heating by controlling the inverter circuits 50 that drive the coils 80, above which it is determined that the object to be heated 5 is placed, of the plurality of coils 80. The controller 45 stops the operation of the inverter circuits 50 that drive the coils 80 above which it is determined that there is no load.

The controller 45 acquires information about the temperatures of the temperature sensing range DET_A, sensed by the top surface temperature sensor 31, and acquires the top surface temperatures T1 of the object to be heated 5 above the coils 80 in heating operation by consulting the mapping information.

The subsequent operation is similar to any one of Embodiments 1 to 4, and the plurality of inverter circuits 50 is driven such that the temperature differences among the top surface temperatures T1 each associated with a corresponding one of the plurality of coils 80 above which the object to be heated 5 is placed reduce.

As described above, in Embodiment 5, the plurality of coils 80 disposed under the top plate 4 in a uniformly distributed manner and the top surface temperature sensor 31 that senses the temperatures in the temperature sensing range DET_A set in advance on the top surface of the top plate 4 are provided.

Therefore, detection of temperatures over a wide range on the top plate 4 is possible. Thus, since the plurality of coils 80 is disposed under the top plate 4 in a uniformly distributed manner, the induction cooking heater conforms to so-called free area induction heating, so usability of the user is significantly improved.

In addition, even when a plurality of the objects to be heated 5 is heated at the same time by placing the plurality of objects to be heated 5 side by side on the top plate 4, for example, when the temperature of an ingredient in any one of the objects to be heated 5 is excessively high, the timing of the finish of cooking is adjusted to that of an ingredient in another one of the objects to be heated 5 by reducing the electric powers of the heating coils just under the any one of the objects to be heated 5, so usability is improved.

### Reference Signs List

1 first heating port, 2 second heating port, 3 third heating port, 4 top plate, 5 object to be heated, 5a to 5e ingredient , 6 top plate, 11 first heating unit, 11-1 to 11-4 coil, 11a to 11e separate coil , 12 second heating unit, 13 third heating unit, 21 alternating-current power supply, 30 top surface temperature sensor, 31 top surface temperature sensor, 35a to 35e bottom surface temperature sensor, 40 operating unit, 41 display unit, 42 receiving unit, 45 controller, 50a to 50e inverter circuit , 80 coil, 80_11 coil, 80_21 coil.

## Claims

1. An induction cooking heater (100) comprising:
a top plate (4) on which an object to be heated is placed;
first and second coils (11b-11e, 11b-11e) disposed under the top plate (4);
a first inverter circuit (50a-50e) configured to supply electric power to the first coil (11b-11e);
a second inverter circuit (50a-50e) provided separately from the first inverter circuit (50a-50e), the second inverter circuit (50a-50e) being configured to supply electric power to the second coil (11b-11e);
a temperature sensor (30) configured to sense a first top surface temperature and a second top surface temperature, the first top surface temperature being a temperature of a top surface, at a location above the first coil (11b-11e), of the object to be heated, the second top surface temperature being a temperature of a top surface, at a location above the second coil (11b-11e), of the object to be heated;
a second temperature sensor (35a-35e) configured to sense a first bottom surface temperature and a second bottom surface temperature, the first bottom surface temperature being a temperature of a bottom surface, at a location above the first coil (11b-11e), of the object to be heated, the second bottom surface temperature being a temperature of a bottom surface, at a location above the second coil (11b-11e), of the object to be heated; and
a controller (45) configured to drive the first inverter circuit (50a-50e) and the second inverter circuit (50a-50e) increasing or decreasing the electric power that is supplied to the first coil or the second coil such that a difference between a first temperature difference and a second temperature difference reduces, the first temperature difference is a temperature difference between the first bottom surface temperature and the first top surface temperature, and the second temperature difference is a temperature difference between the second bottom surface temperature and the second top surface temperature.

2. The induction cooking heater (100) of claim 1, wherein
the controller (45) is configured to, when the first temperature difference is larger than the second temperature difference, increase electric power that is supplied to the first coil (11b-11e).

3. The induction cooking heater (100) of claim 1, wherein
the controller (45) is configured to, when the first temperature difference is larger than the second temperature difference, reduce electric power that is supplied to the second coil (11b-11e).

4. The induction cooking heater (100) of claim 1, wherein
the controller (45) is configured to, when the first temperature difference is larger than the second temperature difference, increase electric power that is supplied to the first coil (11b-11e) and reduce electric power that is supplied to the second coil (11b-11e).

5. The induction cooking heater (100) of any one of claims 1 to 4, wherein
the controller (45) is configured to, when the first temperature difference is smaller than the second temperature difference, reduce electric power that is supplied to the first coil (11b-11e).

6. The induction cooking heater (100) of any one of claims 1 to 4, wherein
the controller (45) is configured to, when the first temperature difference is smaller than the second temperature difference, increase electric power that is supplied to the second coil (11b-11e).

7. The induction cooking heater (100) of any one of claims 1 to 4, wherein
the controller (45) is configured to, when the first temperature difference is smaller than the second temperature difference, reduce electric power that is supplied to the first coil (11b-11e) and increase electric power that is supplied to the second coil (11b-11e).

8. The induction cooking heater (100) of any one of claims 1 to 7, wherein
the controller (45) is configured to, when the first temperature difference after predetermined elapsed time from a start of driving of the first inverter circuit (50a-50e) is smaller than a first threshold, stop driving the first inverter circuit (50a-50e).

9. The induction cooking heater (100) of any one of claims 1 to 8, wherein
the controller (45) is configured to, when the second temperature difference after predetermined elapsed time from a start of driving of the second inverter circuit (50a-50e) is smaller than a second threshold, stop driving the second inverter circuit (50a-50e).

10. The induction cooking heater (100) of any one of claims 1 to 9, wherein
the second temperature sensor (35a-35e) is a contact temperature sensor provided in contact with a bottom surface of the top plate.

11. The induction cooking heater (100) of any one of claims 1 to 10, wherein
the temperature sensor (30) is a noncontact temperature sensor provided above the top plate.

12. The induction cooking heater (100) of any one of claims 1 to 11, wherein
the top plate has a heating port that indicates a location at which the object to be heated is placed,
the first coil (11b-11e) is disposed at a center of the heating port, and
the second coil (11b-11e) is disposed around the first coil (11b-11e).

13. The induction cooking heater (100) of claim 12, wherein
the controller (45) is configured to, when the second top surface temperature is lower by a third threshold or more than the first top surface temperature, set a frequency of electric power that is supplied to the second coil (11b-11e) higher than a frequency of electric power that is supplied to the first coil (11b-11e).

14. The induction cooking heater (100) of any one of claims 1 to 13, wherein
a wide band gap semiconductor is employed as a switching device that constitutes each of the first inverter circuit (50a-50e) and the second inverter circuit (50a-50e).

## Patentansprüche

1. Induktionskoch-Erhitzer (100), umfassend:
eine obere Platte (4), auf der ein zu erhitzendes Objekt platziert wird;
erste und zweite Spulen (11b-11e, 11b-11e), die unter der oberen Platte (4) angeordnet sind;
eine erste Wechselrichterschaltung (50a-50e), die eingerichtet ist, der ersten Spule (11b-11e) elektrische Energie zuzuführen;
eine zweite Wechselrichterschaltung (50a-50e), die von der ersten Wechselrichterschaltung (50a-50e) getrennt vorgesehen ist, wobei die zweite Wechselrichterschaltung (50a-50e) eingerichtet ist, der zweite Spule (11b-11e) elektrische Energie zuzuführen;
einen Temperatursensor (30), der eingerichtet ist, eine erste obere-Oberflächentemperatur und eine zweite obere-Oberflächentemperatur zu erfassen, wobei die erste obere-Oberflächentemperatur eine Temperatur einer oberen Oberfläche an einer Stelle oberhalb der ersten Spule (11b-11e) des zu erhitzenden Objekts ist, und die zweite obere-Oberflächentemperatur eine Temperatur einer oberen Oberfläche an einer Stelle oberhalb der zweiten Spule (11b-11e) des zu erhitzenden Objekts ist;
einen zweiten Temperatursensor (35a-35e), der eingerichtet ist, eine erste untere Oberflächentemperatur und eine zweite untere-Oberflächentemperatur zu erfassen, wobei die erste untere-Oberflächentemperatur eine Temperatur einer unteren Oberfläche an einer Stelle oberhalb der ersten Spule (11b-11e) des zu erhitzenden Objekts ist, und die zweite obere-Oberflächentemperatur eine Temperatur einer unteren Oberfläche an einer Stelle oberhalb der zweiten Spule (11b-11e) des zu erhitzenden Objekts ist; und
eine Steuereinheit (45), die eingerichtet ist, die erste Wechselrichterschaltung (50a-50e) und die zweite Wechselrichterschaltung (50a-50e) anzutreiben, wodurch die elektrische Energie, die der ersten Spule oder der zweiten Spule zugeführt wird, erhöht oder verringert wird, so dass sich eine Differenz zwischen einer ersten Temperaturdifferenz und einer zweiten Temperaturdifferenz reduziert, wobei die erste Temperaturdifferenz eine Temperaturdifferenz zwischen der ersten untere-Oberflächentemperatur und der ersten obere-Oberflächentemperatur ist, und die zweite Temperaturdifferenz eine Temperaturdifferenz zwischen der zweiten untere-Oberflächentemperatur und der zweiten obere-Oberflächentemperatur ist.

2. Induktionskoch-Erhitzer (100) nach Anspruch 1, wobei
die Steuereinheit (45) eingerichtet ist, um, wenn die erste Temperaturdifferenz größer ist als die zweite Temperaturdifferenz, elektrische Energie, die der ersten Spule (11b-11e) zugeführt wird, zu erhöhen.

3. Induktionskoch-Erhitzer (100) nach Anspruch 1, wobei
die Steuereinheit (45) eingerichtet ist, um, wenn die erste Temperaturdifferenz größer ist als die zweite Temperaturdifferenz, elektrische Energie, die der zweiten Spule (11b-11e) zugeführt wird, zu reduzieren.

4. Induktionskoch-Erhitzer (100) nach Anspruch 1, wobei
die Steuereinheit (45) eingerichtet ist, um, wenn die erste Temperaturdifferenz größer ist als die zweite Temperaturdifferenz, elektrische Energie, die der ersten Spule (11b-11e) zugeführt wird, zu erhöhen und elektrische Energie, die der zweiten Spule (11b-11e) zugeführt wird, zu reduzieren.

5. Induktionskoch-Erhitzer (100) nach einem der Ansprüche 1 bis 4, wobei
die Steuereinheit (45) eingerichtet ist, um, wenn die erste Temperaturdifferenz kleiner ist als die zweite Temperaturdifferenz, elektrische Energie, die der ersten Spule (11b-11e) zugeführt wird, zu reduzieren.

6. Induktionskoch-Erhitzer (100) nach einem der Ansprüche 1 bis 4, wobei
die Steuereinheit (45) eingerichtet ist, um, wenn die erste Temperaturdifferenz kleiner ist als die zweite Temperaturdifferenz, elektrische Energie, die der zweiten Spule (11b-11e) zugeführt wird, zu erhöhen.

7. Induktionskoch-Erhitzer (100) nach einem der Ansprüche 1 bis 4, wobei
die Steuereinheit (45) eingerichtet ist, um, wenn die erste Temperaturdifferenz kleiner ist als die zweite Temperaturdifferenz, elektrische Energie, die der ersten Spule (11b-11e) zugeführt wird, zu reduzieren und elektrische Energie, die der zweiten Spule (11b-11e) zugeführt wird, zu erhöhen.

8. Induktionskoch-Erhitzer (100) nach einem der Ansprüche 1 bis 7, wobei
die Steuereinheit (45) eingerichtet ist, um, wenn die erste Temperaturdifferenz nach einer vorherbestimmten abgelaufenen Zeit ab einem Start des Antreibens der ersten Wechselrichterschaltung (50a-50e) kleiner ist als ein erster Schwellenwert, Antreiben der ersten Wechselrichterschaltung (50a-50e) zu stoppen.

9. Induktionskoch-Erhitzer (100) nach einem der Ansprüche 1 bis 8, wobei
die Steuereinheit (45) eingerichtet ist, um, wenn die zweite Temperaturdifferenz nach einer vorherbestimmten abgelaufenen Zeit ab einem Start des Antreibens der zweiten Wechselrichterschaltung (50a-50e) kleiner ist als ein zweiter Schwellenwert, Antreiben der zweiten Wechselrichterschaltung (50a-50e) zu stoppen.

10. Induktionskoch-Erhitzer (100) nach einem der Ansprüche 1 bis 9, wobei
der zweite Temperatursensor (35a-35e) ein Kontakttemperatursensor ist, der in Kontakt mit einer unteren Oberfläche der oberen Platte vorgesehen ist.

11. Induktionskoch-Erhitzer (100) nach einem der Ansprüche 1 bis 10, wobei
der Temperatursensor (30) ein kontaktloser Temperatursensor ist, der oberhalb der oberen Platte vorgesehen ist.

12. Induktionskoch-Erhitzer (100) nach einem der Ansprüche 1 bis 11, wobei
die obere Platte eine Heizöffnung aufweist, die eine Stelle anzeigt, an der das zu erhitzende Objekt platziert wird,
wobei die erste Spule (11b-11e) in einem Zentrum der Heizöffnung angeordnet ist, und
wobei die zweite Spule (11b-11e) um die erste Spule (11b-11e) herum angeordnet ist.

13. Induktionskoch-Erhitzer (100) nach Anspruch 12, wobei
die Steuereinheit (45) eingerichtet ist, um, wenn die zweite obere-Oberflächentemperatur um einen dritten Schwellenwert oder mehr niedriger ist als die erste obere-Oberflächentemperatur, eine Frequenz der elektrischen Energie, die der zweiten Spule (11b-11e) zugeführt wird, höher einzustellen als eine Frequenz der elektrischen Energie, die der ersten Spule (11b-11e) zugeführt wird.

14. Induktionskoch-Erhitzer (100) nach einem der Ansprüche 1 bis 13, wobei
ein Breitbandlücken-Halbleiter als eine Schalteinrichtung eingesetzt wird, die jede von der ersten Wechselrichterschaltung (50a-50e) und der zweiten Wechselrichterschaltung (50a-50e) bildet.

## Revendications

1. Dispositif de cuisson par induction (100) comprenant :
une plaque supérieure (4) sur laquelle un objet à chauffer est placé ;
une première et une seconde bobines (11b à 11e, 11b à 11e) disposées sous la plaque supérieure (4) ;
un premier circuit onduleur (50a à 50e) conçu pour alimenter en énergie électrique la première bobine (11b à 11e) ;
un second circuit onduleur (50a à 50e) prévu séparément du premier circuit onduleur (50a à 50e), le second circuit onduleur (50a à 50e) étant configuré pour alimenter en énergie électrique la seconde bobine (11b à 11e) ;
un capteur de température (30) configuré pour détecter une première température de surface supérieure et une seconde température de surface supérieure, la première température de surface supérieure étant une température d'une surface supérieure, à un emplacement situé au-dessus de la première bobine (11b à 11e), de l'objet à chauffer, la seconde température de surface supérieure étant une température d'une surface supérieure, à un emplacement situé au-dessus de la seconde bobine (11b à 11e), de l'objet à chauffer;
un second capteur de température (35a à 35e) configuré pour détecter une première température de surface inférieure et une seconde température de surface inférieure, la première température de surface inférieure étant une température d'une surface inférieure, à un emplacement situé au-dessus de la première bobine (11b à 11e), de l'objet à chauffer, la seconde température de surface inférieure étant une température d'une surface inférieure, à un emplacement situé au-dessus de la seconde bobine (11b à 11e), de l'objet à chauffer; et
un dispositif de commande (45) configuré pour commander le premier circuit onduleur (50a à 50e) et le second circuit onduleur (50a à 50e) en augmentant ou en diminuant l'énergie électrique qui alimente la première bobine ou la seconde bobine de sorte qu'une différence entre une première différence de température et une seconde différence de température diminue, la première différence de température est une différence de température entre la première température de surface inférieure et la première température de surface supérieure, et la seconde différence de température est une différence de température entre la seconde température de surface inférieure et la seconde température de surface supérieure.

2. Dispositif de cuisson par induction (100) selon la revendication 1, dans lequel
le dispositif de commande (45) est configuré, lorsque la première différence de température est supérieure à la seconde différence de température, pour augmenter l'énergie électrique qui alimente la première bobine (11b à 11e).

3. Dispositif de cuisson par induction (100) selon la revendication 1, dans lequel
le dispositif de commande (45) est configuré, lorsque la première différence de température est supérieure à la seconde différence de température, pour diminuer l'énergie électrique qui alimente la seconde bobine (11b à 11e).

4. Dispositif de cuisson par induction (100) selon la revendication 1, dans lequel
le dispositif de commande (45) est configuré, lorsque la première différence de température est supérieure à la seconde différence de température, pour augmenter l'énergie électrique qui alimente la première bobine (11b à 11e) et diminuer l'énergie électrique qui alimente la seconde bobine (11b à 11e).

5. Dispositif de cuisson par induction (100) selon l'une quelconque des revendications 1 à 4, dans lequel
le dispositif de commande (45) est configuré, lorsque la première différence de température est inférieure à la seconde différence de température, pour diminuer l'énergie électrique qui alimente la première bobine (11b à 11e).

6. Dispositif de cuisson par induction (100) selon l'une quelconque des revendications 1 à 4, dans lequel
le dispositif de commande (45) est configuré, lorsque la première différence de température est inférieure à la seconde différence de température, pour augmenter l'énergie électrique qui alimente la seconde bobine (11b à 11e).

7. Dispositif de cuisson par induction (100) selon l'une quelconque des revendications 1 à 4, dans lequel
le dispositif de commande (45) est configuré, lorsque la première différence de température est inférieure à la seconde différence de température, pour diminuer l'énergie électrique qui alimente la première bobine (11b à 11e) et augmenter l'énergie électrique qui alimente la seconde bobine (11b à 11e).

8. Dispositif de cuisson par induction (100) selon l'une quelconque des revendications 1 à 7, dans lequel
le dispositif de commande (45) est configuré pour arrêter la commande du premier circuit onduleur (50a à 50e), lorsque la première différence de température est inférieure à un premier seuil, après que le temps prédéterminé depuis le début de la commande du premier circuit onduleur (50a à 50e) s'est écoulé.

9. Dispositif de cuisson par induction (100) selon l'une quelconque des revendications 1 à 8, dans lequel
le dispositif de commande (45) est configuré pour arrêter la commande du second circuit onduleur (50a à 50e), lorsque la seconde différence de température est inférieure à un second seuil, après que le temps prédéterminé depuis le début de la commande du second circuit onduleur (50a à 50e) s'est écoulé.

10. Dispositif de cuisson par induction (100) selon l'une quelconque des revendications 1 à 9, dans lequel
le second capteur de température (35a à 35e) est un capteur de température de contact prévu en contact avec une surface inférieure de la plaque supérieure.

11. Dispositif de cuisson par induction (100) selon l'une quelconque des revendications 1 à 10, dans lequel
le capteur de température (30) est un capteur de température sans contact prévu au-dessus de la plaque supérieure.

12. Dispositif de cuisson par induction (100) selon l'une quelconque des revendications 1 à 11, dans lequel
la plaque supérieure présente un orifice de chauffage qui indique un emplacement où l'objet à chauffer est placé,
la première bobine (11b à 11e) est disposée au centre de l'orifice de chauffage, et
la seconde bobine (11b à 11e) est disposée autour de la première bobine (11b à 11e).

13. Dispositif de cuisson par induction (100) selon la revendication 12, dans lequel
le dispositif de commande (45) est configuré, lorsque la seconde température de surface supérieure est inférieure selon au moins un troisième seuil à la première température de surface supérieure, pour régler une fréquence d'énergie électrique qui alimente la seconde bobine (11b à 11e) au-dessus d'une fréquence d'énergie électrique qui alimente la première bobine (11b à 11e).

14. Dispositif de cuisson par induction (100) selon l'une quelconque des revendications 1 à 13, dans lequel
un semi-conducteur à large bande interdite est utilisé comme dispositif de commutation qui constitue chacun parmi le premier circuit onduleur (50a à 50e) et le second circuit onduleur (50a à 50e).
